# EUROPEAN PATENT APPLICATION

(11) **EP 4 756 506 A1**
(43) Date of publication of application: **10.06.2026**
(21) Application number: 24848777.9
(22) Date of filing: 01.07.2024
(51) Int. Cl.: G02B 6/36

(54) **HOLDING MEMBER, OPTICAL CONNECTOR, AND OPTICAL CONNECTION ASSEMBLY**

(30) Priority: 02.08.2023 JP 2023125980
(71) Applicant: Sumitomo Electric Industries, Ltd., Osaka-shi, Osaka 541-0041 (JP)
(72) Inventor: MORISHIMA Tetsu, Osaka-shi, Osaka 541-0041 (JP)
(74) Representative: TBK
(86) International application number: PCT/JP2024/023811
(87) International publication number: WO 2025/028118

(57) **Abstract**

A holding member (30) includes: a front end surface (31) that faces, in a first direction, an inner wall surface (201) of the interior of an optical connector ferrule; a rear end surface (32) that is disposed on a side opposite the front end surface in the first direction; a bottom surface (34) that contacts, in a second direction, a bottom wall surface (202) of the interior of the optical connector ferrule; a plurality of holding parts (37) that extend along the first direction between the front end surface and the rear end surface, are arranged along a third direction, and can each hold one of a plurality of optical fibers; and a stopper (40) that is formed on the surface of the holding member and maintains a distance in the first direction between the front end surface and the inner wall surface within a predetermined range when tip portions (14) of a plurality of optical fibers (10) extending from the holding member are respectively inserted into a plurality of insertion holes (24) in the first direction.

## Description

### TECHNICAL FIELD

The present disclosure relates to a holding member, an optical connector, and an optical connection assembly. This application claims priority based on Japanese Patent Application No. 2023-125980 filed on August 2, 2023, the entire contents of which are incorporated herein by reference.

### BACKGROUND ART

Conventionally, an optical fiber holding member for holding a plurality of optical fibers (for example, Patent Literature 1) is known. The plurality of optical fibers are inserted into and held by a plurality of fiber holes formed in the optical fiber holding member. Tip portions of the optical fibers protrude from the respective fiber holes. In this state, the optical fiber holding member is disposed inside a ferrule. The tip portions of the plurality of optical fibers protruding from the optical fiber holding member are inserted into a plurality of insertion holes formed inside the ferrule, respectively. Then, the optical fiber holding member is fixed to the ferrule, thereby forming a connector.

### CITATION LIST

### PATENT LITERATURE

Patent literature 1: WO 2016/031678

### SUMMARY OF INVENTION

A holding member according to an embodiment of the present disclosure is a holding member configured to be disposed, in a state of holding a plurality of optical fibers, on a bottom wall surface inside an optical connector ferrule such that a tip portion of each of the plurality of optical fibers is inserted into a respective one of a plurality of insertion holes formed in an inner wall surface of the optical connector ferrule. The holding member includes a front end surface facing the inner wall surface in a first direction intersecting the inner wall surface, a rear end surface disposed opposite the front end surface in the first direction, a bottom surface in contact with the bottom wall surface in a second direction intersecting the first direction, a plurality of holding portions extending along the first direction between the front end surface and the rear end surface and arranged side by side along a third direction intersecting the first direction and the second direction, each of the plurality of holding portions being configured to be capable of holding a respective one of the plurality of optical fibers, and a stopper formed on a surface of the holding member and configured to maintain a distance in the first direction between the front end surface and the inner wall surface within a specified range when the tip portions of the plurality of optical fibers extending from the holding member are inserted into respective ones of the plurality of insertion holes in the first direction.

### BRIEF DESCRIPTION OF THE DRAWINGS

[FIG. 1] FIG. 1 is a perspective view of an optical connector according to an embodiment.
[FIG. 2] FIG. 2 is a cross-sectional view of an optical connector.
[FIG. 3] FIG. 3 is another cross-sectional view of an optical connector.
[FIG. 4] FIG. 4 is a front view of an optical connector.
[FIG. 5] FIG. 5 is a cross-sectional view of an optical connector ferrule.
[FIG. 6] FIG. 6 is another cross-sectional view of an optical connector ferrule.
[FIG. 7] FIG. 7 is a cross-sectional view of a holding member.
[FIG. 8] FIG. 8 is a front view of a holding member.
[FIG. 9] FIG. 9 is a view showing a state in which a holding member is being inserted into an optical connector ferrule.
[FIG. 10] FIG. 10 is a view showing a state after a holding member is inserted into an optical connector ferrule.
[FIG. 11] FIG. 11 is a graph showing a relationship between a bending radius R and a distance L.
[FIG. 12] FIG. 12 is a perspective view of an optical connection assembly.
[FIG. 13] FIG. 13 is a cross-sectional view of an optical connector according to a modification 1.
[FIG. 14] FIG. 14 is another cross-sectional view of the optical connector of FIG. 13.
[FIG. 15] FIG. 15 is a cross-sectional view of an optical connector according to a modification 2.
[FIG. 16] FIG. 16 is another cross-sectional view of the optical connector of FIG. 15.

### DETAILED DESCRIPTION

### [Problems to be Solved by Present Disclosure]

When the above-described optical fiber holding member is disposed inside the ferrule, it is difficult to completely align the central axis of each fiber hole of the optical fiber holding member and the central axis of the insertion hole of the ferrule due to the influence of manufacturing tolerances, and thus, an axial misalignment is likely to occur between the fiber hole and the insertion hole. Such an axial misalignment may cause bending of the optical fiber inserted from the insertion hole into the fiber hole. When bending stress applied to the optical fiber increases, failures such as an increase in transmission loss and damage to the optical fiber may occur. As a result, reliability of the optical fiber may decrease.

The present disclosure provides a holding member, an optical connector, and an optical connection assembly that can reduce a decrease in reliability of an optical fiber.

### [Advantageous Effects of Present Disclosure]

According to a holding member, an optical connector, and an optical connection assembly of the present disclosure, it is possible to reduce a decrease in reliability of an optical fiber.

### [Description of Embodiments of Present Disclosure]

First, the contents of the embodiments of the present disclosure will be listed and described.
(1) A holding member according to an embodiment of the present disclosure is a holding member configured to be disposed, in a state of holding a plurality of optical fibers, on a bottom wall surface inside an optical connector ferrule such that a tip portion of each of the plurality of optical fibers is inserted into a respective one of a plurality of insertion holes formed in an inner wall surface of the optical connector ferrule. The holding member includes a front end surface facing the inner wall surface in a first direction intersecting the inner wall surface, a rear end surface disposed opposite the front end surface in the first direction, a bottom surface in contact with the bottom wall surface in a second direction intersecting the first direction, a plurality of holding portions extending along the first direction between the front end surface and the rear end surface and arranged side by side along a third direction intersecting the first direction and the second direction, each of the plurality of holding portions being configured to be capable of holding a respective one of the plurality of optical fibers, and a stopper formed on a surface of the holding member and configured to maintain a distance in the first direction between the front end surface and the inner wall surface within a specified range when the tip portions of the plurality of optical fibers extending from the holding member are inserted into respective ones of the plurality of insertion holes in the first direction.
   The holding member includes the stopper for maintaining the distance in the first direction between the front end surface of the holding member and the inner wall surface of the optical connector ferrule within a specified range when the tip portions of the plurality of optical fibers extending from the holding member are inserted into respective ones of the plurality of insertion holes in the first direction. The distance between the front end surface of the holding member and the inner wall surface of the optical connector ferrule greatly affects bending stress on the optical fiber. When the distance between the front end surface and the inner wall surface is too small, the optical fiber extending from the front end surface to the inner wall surface is likely to be bent sharply, and thus the bending stress on the optical fiber increases. When the distance between the front end surface and the inner wall surface is too large, a middle portion of the optical fiber between the front end surface and the inner wall surface is likely to deflect. Thus, the bending stress on the optical fiber increases in this case as well. In contrast, in the holding member, the distance between the front end surface and the inner wall surface is maintained within the specified range by using the stopper, so that the position of the holding member with respect to the optical connector ferrule can be easily and appropriately restricted so as not to increase the bending stress on the optical fiber. As a result, it is possible to reduce occurrence of failures such as an increase in transmission loss and damage to the optical fiber due to an increase in the bending stress. Thus, the holding member can reduce a decrease in reliability of the optical fiber.
(2) In the holding member according to the above (1), the specified range may be 0.5 mm to 3 mm. By maintaining the specified range of the distance between the front end surface of the holding member and the inner wall surface of the optical connector ferrule to be 0.5 mm or more, it is possible to effectively reduce an increase in the bending stress due to the occurrence of a sharp bend in the optical fiber. By maintaining the specified range of the distance between the front end surface of the holding member and the inner wall surface of the optical connector ferrule to be 3 mm or less, it is possible to effectively reduce an increase in the bending stress due to the occurrence of the deflection in the middle portion of the optical fiber.
(3) In the holding member according to the above (1) or (2), the stopper may be at least one front-end projection formed on the front end surface to protrude in the first direction from the front end surface. In this case, the front-end projection comes into contact with the inner wall surface of the optical connector ferrule in the first direction, so that the distance between the front end surface of the holding member and the inner wall surface can be easily and reliably maintained within the specified range.
(4) In the holding member according to the above (3), the stopper may include a plurality of the front-end projections. The plurality of front-end projections may be arranged to be spaced apart from each other in at least one of the second direction and the third direction, each of the second and third directions being along the front end surface. In this case, when the holding member is fixed to the ferrule by injecting an adhesive into the ferrule, the adhesive can easily spread into the ferrule through a space between the plurality of front-end projections. That is, in the above configuration, it is possible to reduce the possibility that the flow of the adhesive is hindered by the stopper. This makes it possible to more reliably fix the plurality of optical fibers and the holding member by the adhesive.
(5) In the holding member according to the above (4), the plurality of front-end projections may be symmetrically arranged with respect to a center of the front end surface in at least one of the second direction and the third direction. In this case, in a state in which the plurality of front-end projections are in contact with the inner wall surface, the posture of the holding member with respect to the ferrule can be stabilized. As a result, it is possible to reduce an increase in the bending stress caused by instability of the posture of the holding member.
(6) The holding member according to the above (1) or (2) may further include a pair of side surfaces as the surface, the pair of side surfaces being arranged between the front end surface and the rear end surface to be spaced apart from each other in the third direction. A distance between the pair of side surfaces in the third direction may increase with decreasing distance from the rear end surface in the first direction. Each of the pair of side surfaces may serve as the stopper and each side surface may come into contact with a respective one of a pair of side wall surfaces inside the optical connector ferrule in the first direction and the third direction. In this case, the pair of side surfaces of the holding member comes into contact with a respective one of the pair of side wall surfaces inside the optical connector ferrule in the first direction, so that the distance between the front end surface of the holding member and the inner wall surface of the optical connector ferrule can be maintained within the specified range. Further, the pair of side surfaces of the holding member comes into contact with a respective one of the pair of side wall surfaces inside the ferrule in the third direction, so that the position of the holding member with respect to the optical connector ferrule in the third direction can be determined. That is, in the above configuration, the pair of side surfaces of the holding member can have both the function of positioning the holding member in the first direction with respect to the optical connector ferrule and the function of positioning the holding member in the third direction with respect to the optical connector ferrule.
(7) In the holding member according to the above (1) or (2), the stopper may be a rear-end projection formed on the rear end surface and protruding in at least one of the second direction and the third direction from the rear end surface. The rear-end projection may be in contact with a ferrule rear-end surface in the first direction, the ferrule rear-end surface having an opening in communication with the inside of the optical connector ferrule. In this case, the rear-end projection comes into contact with the ferrule rear-end surface in the first direction, so that the distance between the front end surface of the holding member and the inner wall surface of the optical connector ferrule can be maintained within the specified range. Further, in the above configuration, the stopper can be formed in a wider range outside the optical connector ferrule as compared with a configuration in which the stopper is formed inside the optical connector ferrule. In this case, a contact area between the rear-end projection as the stopper and the ferrule rear-end surface can be maintained large. As a result, in a state where the rear-end projection comes into contact with the ferrule rear-end surface, the posture of the holding member with respect to the ferrule can be stabilized. Thus, in the above configuration, it is possible to reduce an increase in the bending stress due to the instability of the posture of the holding member.
(8) An optical connector according to an embodiment of the present disclosure includes the holding member according to any one of the above (1) to (7), the plurality of optical fibers configured to be held by the holding member in a state where the tip portions thereof protrude from the holding member, and the ferrule including the plurality of insertion holes into each of which a respective one of the tip portions of the plurality of optical fibers is inserted and fixed. Since the optical connector includes any one of the holding members described above, the optical connector can reduce the decrease in the reliability of the optical fiber as described above.
(9) In the optical connector according to the above (8), each of the plurality of optical fibers may be a multicore optical fiber. When such an optical fiber is used, rotational alignment of the optical fiber is required. In this case, the bending stress of the optical fiber is likely to further increase due to friction between an outer surface of the tip portion of the optical fiber and an inner surface of the insertion hole. In the optical connector described above, since an increase in bending stress can be reduced as described above, the risk of occurrence of failures due to the increase in bending stress can be effectively reduced.
(10) An optical connection assembly according to an embodiment of the present disclosure includes a first optical connector and a second optical connector, each being the optical connectors according to the above (8) or (9). The first optical connector and the second optical connector are arranged to face each other along the first direction. Since the optical connection assembly includes the first optical connector and the second optical connector each being the optical connectors described above, it is possible to reduce the decrease in the reliability of the optical fiber as described above.

### [Details of Embodiments of Present Disclosure]

Specific examples of a holding member, an optical connector, and an optical connection assembly according to embodiments of the present disclosure will be described below with reference to the drawings. The present disclosure is not limited to these examples, but is defined by the scope of the claims, and is intended to include all modifications within the meaning and scope equivalent to the scope of the claims. In the following description, the same elements are denoted by the same reference numerals in the description of the drawings, and redundant description will be omitted as appropriate.

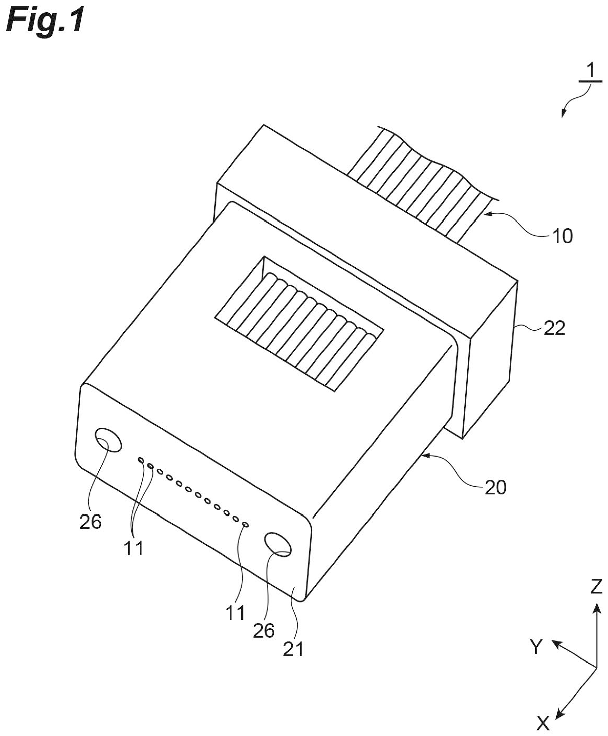

FIG. 1 is a perspective view of an optical connector 1 according to the embodiment. In the following description, for convenience of description, a longitudinal direction of the optical connector 1 is defined as an X direction (first direction), a lateral direction of the optical connector 1 is defined as a Y direction (third direction), and a height direction of the optical connector 1 is defined as a Z direction (second direction). The X direction, the Y direction, and the Z direction intersect each other (in one example, are orthogonal to each other). In the following description, a positive direction of the Z direction may be referred to as "up", a negative direction of the Z direction may be referred to as "down", a positive direction of the X direction may be referred to as "front", and a negative direction of the X direction may be referred to as "rear".

As shown in FIG. 1, the optical connector 1 includes a plurality of optical fibers 10, an optical connector ferrule (hereinafter, simply referred to as "ferrule") 20, and a holding member 30. Each of the plurality of optical fibers 10 is a cable that transmits an optical signal. The plurality of optical fibers 10 extend in the X direction and are arranged side by side in the Y direction. FIG. 1 shows an example in which 12 optical fibers 10 are arranged in a single row in the Y direction. However, the number of the plurality of optical fibers 10 is not limited to 12, and may be, for example, 4, 8, or 24. The plurality of optical fibers 10 may be arranged in two or more rows.

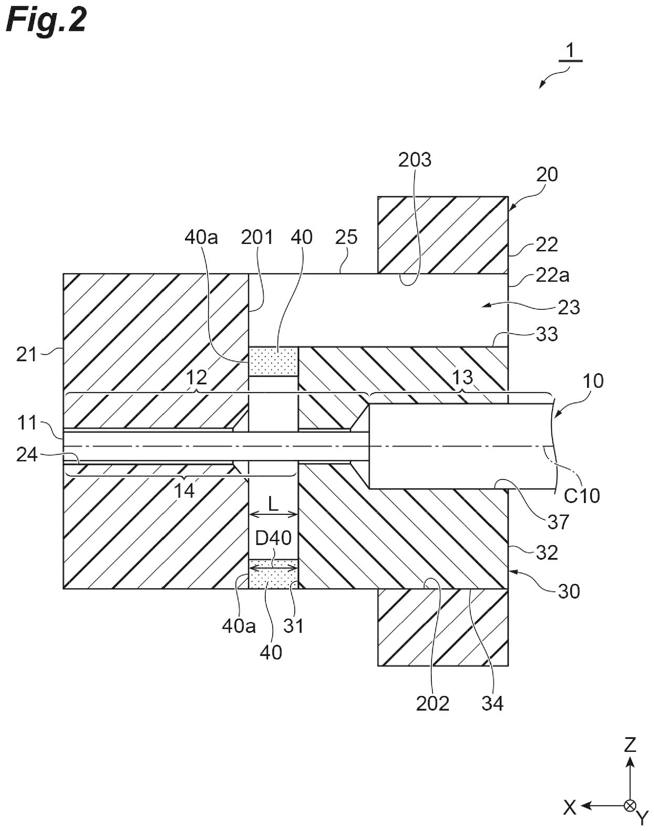

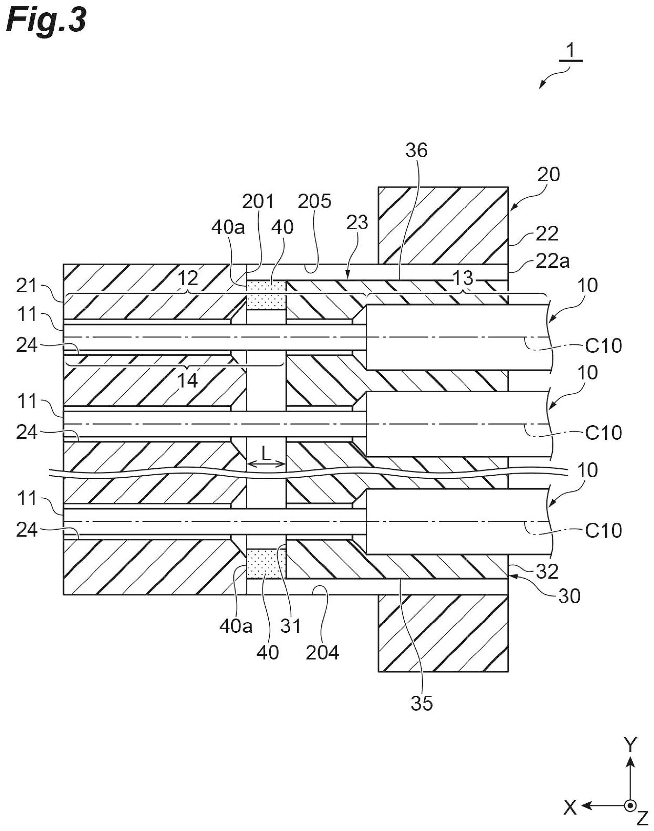

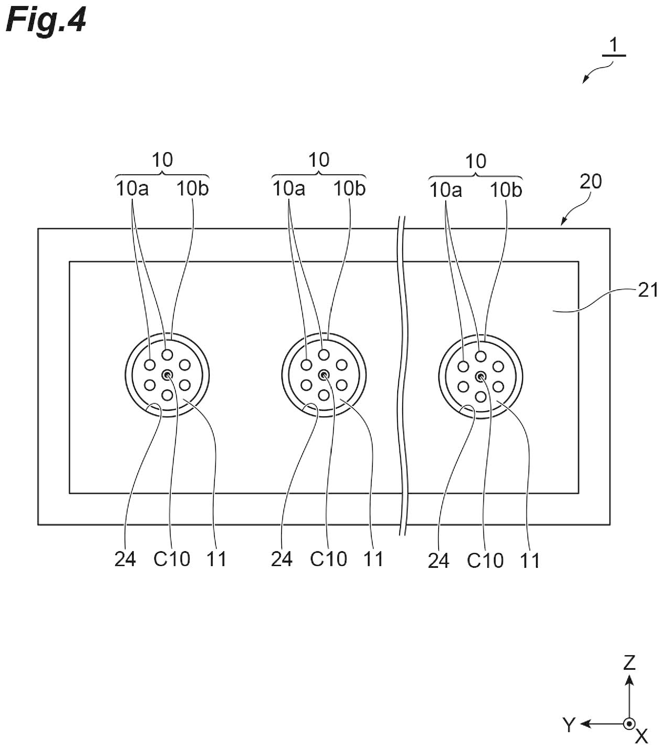

FIG. 2 is a cross-sectional view showing an XZ cross-section of the optical connector 1. FIG. 3 is a cross-sectional view showing an XY cross-section of the optical connector 1. FIG. 4 is a front view of the optical connector 1. Note that, in FIGS. 3 and 4, guide holes 26, 26 described later are omitted for convenience. As shown in FIGS. 2 and 3, each optical fiber 10 includes a coating-removed portion 12 and a coated portion 13. The coating-removed portion 12 is a portion of the optical fiber 10 from which a resin coating has been removed for a predetermined length from a distal end surface 11. The distal end surface 11 is an end surface located at a tip of the optical fiber 10 in the X direction. In the coating-removed portion 12, a cladding portion of the optical fiber 10 is exposed. An outer diameter of the coating-removed portion 12 (i.e., the diameter of the cladding portion) is, for example, 30 µm to 300 µm. The coated portion 13 is a portion of the optical fiber 10 where the resin coating remains. An outer diameter of the coated portion 13 is, for example, 50 µm to 500 µm.

The optical fiber 10 is, for example, an optical fiber that requires rotational alignment with respect to a central axis C10. In the embodiment, a multi core fiber (MCF) is shown as the optical fiber 10 requiring rotational alignment. In this case, as shown in FIG. 4, the optical fiber 10 includes a plurality of cores 10a and a cladding 10b covering the plurality of cores 10a. In the optical fiber 10, at least one of the plurality of cores 10a is arranged at a position deviated from the central axis C10. The number and arrangement of the plurality of cores 10a are not limited to the example shown in FIG. 4, and can be changed as appropriate. For example, the number of the plurality of cores 10a is not limited to six, and may be two, four, or eight or more.

The optical fiber 10 may not include the core 10a arranged on the central axis C10. Examples of the optical fiber 10 requiring rotational alignment include a bundle fiber and a polarization maintaining fiber (PMF). When the optical fiber 10 is a polarization maintaining fiber, the optical fiber 10 has a stress applying portion at a position deviated from the central axis C10. In this case, for example, the optical fiber 10 has a core arranged on the central axis C10, and a pair of stress applying portions are arranged on both sides of the core.

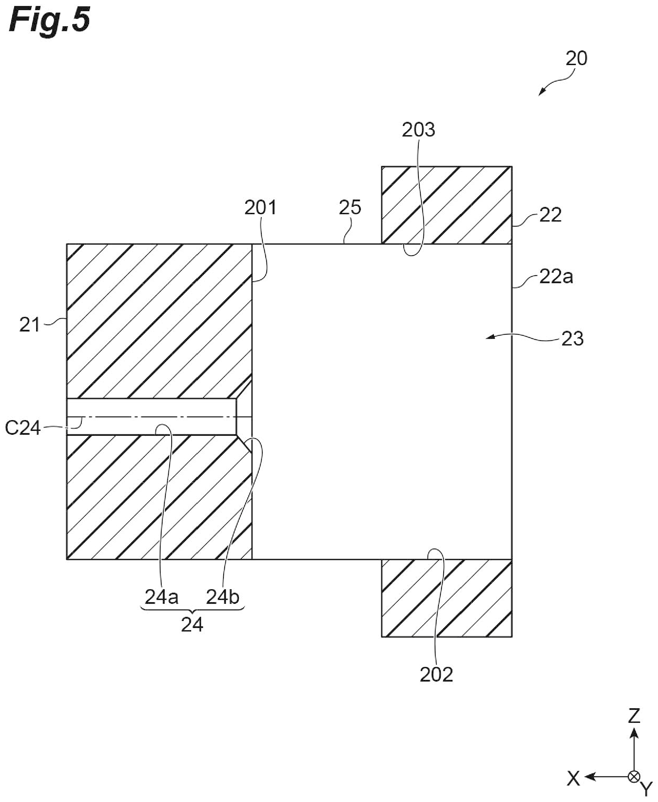

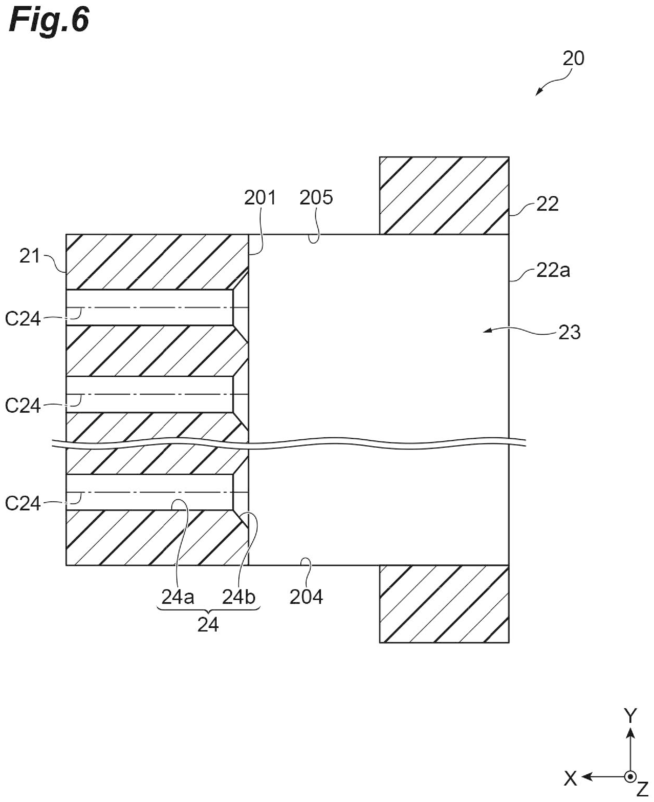

FIG. 5 is a cross-sectional view showing an XZ cross-section of the ferrule 20. FIG. 6 is a cross-sectional view showing an XY cross-section of the ferrule 20. The ferrule 20 is, for example, an MT ferrule that holds the plurality of optical fibers 10. The ferrule 20 has an appearance of a substantially rectangular parallelepiped shape. The ferrule 20 is formed of, for example, polyphenylene sulfide (PPS). The ferrule 20 includes, for example, a ferrule front-end surface 21 and a ferrule rear-end surface 22. The ferrule front-end surface 21 is an end surface located at a front end of the ferrule 20 in the X direction. The ferrule rear-end surface 22 is an end surface located opposite the ferrule front-end surface 21. The ferrule rear-end surface 22 is arranged in the X direction with the ferrule front-end surface 21. The ferrule rear-end surface 22 is, for example, a flat surface along the Y direction and the Z direction. The ferrule rear-end surface 22 has an opening 22a capable of receiving the plurality of optical fibers 10.

The ferrule 20 includes an introduction hole 23 and a plurality of insertion holes 24 therein. The introduction hole 23 extends in the X direction from the opening 22a of the ferrule rear-end surface 22 to an inner wall surface 201 formed inside the ferrule 20. The introduction hole 23 has a space into which the holding member 30 holding the plurality of optical fibers 10 can be introduced. The inner wall surface 201 is formed between the ferrule front-end surface 21 and the ferrule rear-end surface 22 in the X direction. The inner wall surface 201 is, for example, a flat surface along the Y direction and the Z direction, similarly to the ferrule rear-end surface 22. The inner wall surface 201 extends, for example, parallel to the ferrule rear-end surface 22. In addition to the inner wall surface 201, a bottom wall surface 202, an upper wall surface 203, a side wall surface 204, and a side wall surface 205 are formed inside the ferrule 20. The bottom wall surface 202, the upper wall surface 203, the side wall surface 204, and the side wall surface 205 extend in the X direction from the inner wall surface 201 to the opening 22a of the ferrule rear-end surface 22, and define an internal space of the introduction hole 23 together with the inner wall surface 201. Thus, the internal space of the introduction hole 23 is a space surrounded by the inner wall surface 201, the bottom wall surface 202, the upper wall surface 203, the side wall surface 204, and the side wall surface 205.

As shown in FIG. 5, the bottom wall surface 202 and the upper wall surface 203 face each other in the Z direction and are arranged to be spaced apart from each other in the Z direction. Each of the bottom wall surface 202 and the upper wall surface 203 is, for example, a flat surface along the X direction and the Y direction, and is formed perpendicular to the inner wall surface 201 and the ferrule rear-end surface 22. The bottom wall surface 202 and the upper wall surface 203 extend, for example, parallel to each other. A window 25 for injecting an adhesive is formed in the upper wall surface 203. The window 25 is located in a portion of the upper wall surface 203 close to the inner wall surface 201. As shown in FIG. 6, the side wall surface 204 and the side wall surface 205 face each other in the Y direction and are arranged to be spaced apart from each other in the Y direction. Each of the side wall surface 204 and the side wall surface 205 is, for example, a flat surface along the X direction and the Z direction, and is formed perpendicular to the inner wall surface 201 and the ferrule rear-end surface 22.

As shown in FIGS. 5 and 6, each of the plurality of insertion holes 24 is, for example, a through hole penetrating in the X direction from the inner wall surface 201 to the ferrule front-end surface 21. The insertion holes 24 are arranged in a single row in the Y direction corresponding to the optical fibers 10, for example. Each insertion hole 24 is, for example, a circular hole centered on a central axis C24. A pair of guide holes 26, 26 (see FIG. 1) extending in the X direction from the ferrule front-end surface 21 toward the ferrule rear-end surface 22 are formed at positions sandwiching the plurality of insertion holes 24 in the Y direction. Each insertion hole 24 is opened at the ferrule front-end surface 21 and the inner wall surface 201. Each insertion hole 24 is connected to the introduction hole 23 in the X direction at the inner wall surface 201. The tip portions 14 of the plurality of optical fibers 10 introduced into the introduction hole 23 are inserted into respective ones of the insertion holes 24 (see FIGS. 2 and 3). The tip portion 14 may be, for example, a portion of the coating-removed portion 12 including the distal end surface 11.

Each insertion hole 24 includes a positioning portion 24a for defining the position of the coating-removed portion 12 of the optical fiber 10, and a tapered portion 24b (introduction portion) for introducing the coating-removed portion 12 into the positioning portion 24a. The positioning portion 24a is a circular small-diameter hole extending from the ferrule front-end surface 21 in the X direction. The positioning portion 24a has a constant inner diameter at each position along the X direction. An inner diameter of the positioning portion 24a has a size capable of holding the tip portion 14. A distance between an inner peripheral surface of the positioning portion 24a and an outer peripheral surface of the tip portion 14 in the YZ plane is sufficiently small. The positioning portion 24a is opened at the ferrule front-end surface 21. The distal end surface 11 of the optical fiber 10 inserted into the positioning portion 24a of the insertion hole 24 is exposed from the opening of the ferrule front-end surface 21 (see FIG. 4).

The tapered portion 24b is disposed between the positioning portion 24a and the inner wall surface 201. The tapered portion 24b extends from the positioning portion 24a to the inner wall surface 201 in the X direction, and connects the positioning portion 24a and the inner wall surface 201 in the X direction. The tapered portion 24b has an inner diameter that is larger than the inner diameter of the positioning portion 24a. The inner diameter of the tapered portion 24b decreases as it approaches the positioning portion 24a from the inner wall surface 201 in the X direction. That is, the tapered portion 24b gradually decreases in diameter as it approaches the positioning portion 24a. The tapered portion 24b is opened at the inner wall surface 201 and receives the optical fiber 10 from the opening of the inner wall surface 201. When the optical fiber 10 is inserted into the insertion hole 24, the tip portion 14 of the optical fiber 10 is guided to the positioning portion 24a by the tapered portion 24b and inserted into the positioning portion 24a.

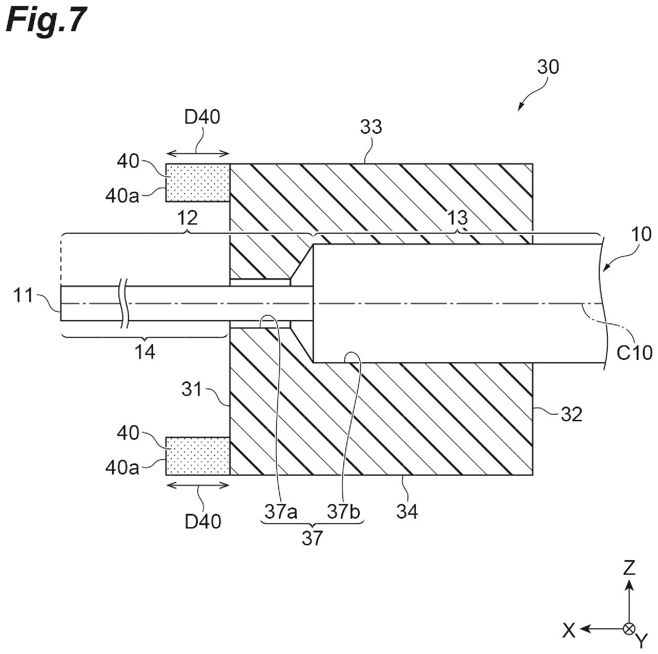

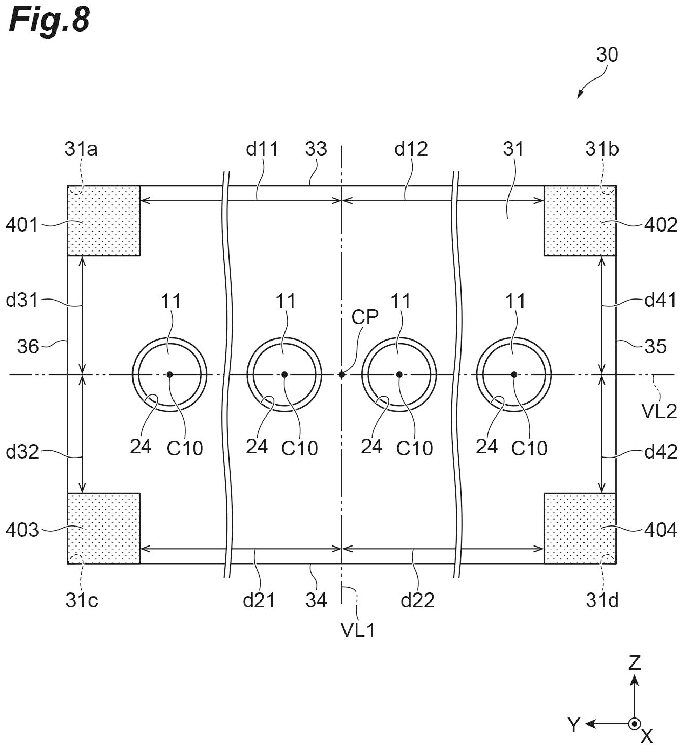

FIG. 7 is a cross-sectional view showing an XZ cross-section of the holding member 30 holding the plurality of optical fibers 10. FIG. 8 is a front view of the holding member 30. The holding member 30 is, for example, a member having a rectangular parallelepiped shape, and holds the plurality of optical fibers 10. The holding member 30 is disposed on the bottom wall surface 202 inside the ferrule 20 in a state of holding the plurality of optical fibers 10. The holding member 30 is formed of, for example, a resin or silica glass that can transmit ultraviolet rays (UV) having a wavelength of 200 nm to 400 nm, or visible light having a wavelength of 400 nm to 850 nm. The holding member 30 may be formed of, for example, a metal material.

The holding member 30 includes, for example, a front end surface 31, a rear end surface 32, an upper surface 33, a bottom surface 34, a side surface 35, and a side surface 36. These surfaces constitute the surface of the holding member 30. The front end surface 31 and the rear end surface 32 are, for example, flat surfaces along the Y direction and the Z direction, and are arranged along the X direction. The front end surface 31 and the rear end surface 32 extend, for example, parallel to each other. The upper surface 33 and the bottom surface 34 are, for example, flat surfaces along the X direction and the Y direction, and are arranged along the Z direction. The upper surface 33 and the bottom surface 34 extend, for example, in parallel to each other, and are formed perpendicular to the front end surface 31 and the rear end surface 32. As shown in FIG. 8, the side surface 35 and the side surface 36 are, for example, flat surfaces along the X direction and the Z direction, and are arranged along the Y direction. The side surface 35 and the side surface 36 extend, for example, parallel to each other and are formed perpendicular to the front end surface 31 and the rear end surface 32.

As shown in FIG. 7, the holding member 30 further includes a plurality of holding holes 37 (holding portions) penetrating from the front end surface 31 to the rear end surface 32 in the X direction. The plurality of holding holes 37 are arranged side by side along the Y direction corresponding to the arrangement of the plurality of optical fibers 10 (see FIG. 8). Each holding hole 37 includes, for example, a small-diameter portion 37a and a large-diameter portion 37b. The coating-removed portion 12 of the optical fiber 10 is inserted into the small-diameter portion 37a. An inner diameter of the small-diameter portion 37a is equal to or slightly larger than the outer diameter of the coating-removed portion 12. The large-diameter portion 37b has an inner diameter larger than the inner diameter of the small-diameter portion 37a. The coated portion 13 of the optical fiber 10 is inserted into the large-diameter portion 37b. The inner diameter of the large-diameter portion 37b is equal to or slightly larger than the outer diameter of the coated portion 13.

When the plurality of optical fibers 10 are mounted on the holding member 30, rotational alignment of each of the optical fibers 10 is performed in a state in which the coating-removed portion 12 and the coated portion 13 are inserted into the small-diameter portion 37a and the large-diameter portion 37b, respectively, and the optical fiber 10 is fixed to an inner surface of the holding hole 37 by the adhesive injected into the holding hole 37. Thus, the holding member 30 holding the plurality of optical fibers 10 is obtained. In a state of the holding member 30 holding the plurality of optical fibers 10, the tip portions 14 of the coating-removed portions 12 protrude from the front end surface 31 in the X direction. The tip portion 14 may be, for example, a portion of the optical fiber 10 protruding forward from the front end surface 31.

As the adhesive for fixing the plurality of optical fibers 10 to the holding member 30, for example, an ultraviolet (UV) curable resin, a thermosetting resin, or an anaerobic resin is used. The plurality of optical fibers 10 may be fixed to the holding member 30 by laser welding instead of the adhesive. Only the coating-removed portion 12 of the optical fiber 10 may be inserted into the holding hole 37, or only the coated portion 13 of the optical fiber 10 may be inserted into the holding hole 37.

As shown in FIGS. 7 and 8, the holding member 30 further includes a plurality of front-end projections 40 (stoppers) protruding from the front end surface 31 in the X direction. The plurality of front-end projections 40 function as stoppers that determine the position of the holding member 30 with respect to the ferrule 20. That is, when the holding member 30 is inserted into the ferrule 20, each front-end projection 40 protruding from the front end surface 31 comes in contact with the inner wall surface 201 of the ferrule 20 to be described later, thereby stopping the movement of the holding member 30 in the X direction with respect to the ferrule 20 (see FIGS. 2 and 3). In each drawing, for convenience, the plurality of front-end projections 40 as stoppers are hatched with a dot pattern different from that of other configurations.

Each front-end projection 40 is, for example, a protrusion of a rectangular parallelepiped shape formed on the front end surface 31. Each front-end projection 40 is, for example, integrally formed with the holding member 30. Each front-end projection 40 may be formed separately from the holding member 30. As shown in FIG. 7, each front-end projection 40 includes a contact surface 40a disposed at a position protruding from the front end surface 31 in the X direction. The contact surface 40a is, for example, a flat surface along the Y direction and the Z direction. The contact surface 40a is parallel to the front end surface 31 and perpendicular to the bottom surface 34. When the holding member 30 is introduced into the ferrule 20, the contact surface 40a of each front-end projection 40 abuts against the inner wall surface 201 in the X direction (see FIGS. 2 and 3). Thus, the position of the holding member 30 in the X direction with respect to the ferrule 20 is determined. A projection amount D40 of each front-end projection 40 in the X direction, that is, a distance between each contact surface 40a and the front end surface 31 in the X direction, may be the same as each other.

In FIG. 8, four front-end projections 401, 402, 403, 404 are shown as the plurality of front-end projections 40. The front-end projections 401, 402, 403, 404 are arranged at positions spaced apart from each other on the front end surface 31. For example, the front-end projections 401, 402, 403, 404 are arranged at positions where the distances from a center CP of the rectangular front end surface 31 to the front-end projections 401, 402, 403, 404 are equal. For example, front-end projections 401, 402, 403, 404 are symmetrically arranged with respect to the center CP of the front end surface 31 in at least one of the Y direction and the Z direction.

The two front-end projections 401, 402 are arranged to be spaced apart from each other along the Y direction. The two front-end projections 401, 402 are arranged at positions symmetrical with respect to a virtual plane VL1 passing through the center CP and perpendicular to the Y direction, for example. A distance d11 in the Y direction between the front-end projection 401 and the virtual plane VL1 is equal to a distance d12 in the Y direction between the front-end projection 402 and the virtual plane VL1. The two front-end projections 403, 404 are arranged at positions spaced apart from the two front-end projections 401, 402 in the Z direction, respectively, and are arranged to be spaced apart from each other along the Y direction. The two front-end projections 403, 404 are arranged at positions symmetrical with respect to the virtual plane VL1 passing through the center CP, for example, similarly to the two front-end projections 401, 402. A distance d21 in the Y direction between the front-end projection 403 and the virtual plane VL1 is equal to a distance d22 in the Y direction between the front-end projection 404 and the virtual plane VL1.

The two front-end projections 401, 403 arranged in the Z direction are arranged at positions symmetrical with respect to a virtual plane VL2 passing through the center CP and perpendicular to the Z direction. A distance d31 in the Z direction between the front-end projection 401 and the virtual plane VL2 is equal to a distance d32 in the Z direction between the front-end projection 403 and the virtual plane VL2. The two front-end projections 402, 404 arranged in the Z direction are arranged at positions symmetrical with respect to the virtual plane VL2 passing through the center CP. A distance d41 in the Z direction between the front-end projection 402 and the virtual plane VL2 is equal to a distance d42 in the Z direction between the front-end projection 404 and the virtual plane VL2.

In one example, front-end projections 401, 402, 403, 404 are arranged at corner portions 31a, 31b, 31c, 31d of the rectangular front end surface 31, respectively. The front-end projection 401 is arranged at the corner portion 31a formed by a side of the front end surface 31 in contact with the upper surface 33 and a side of the front end surface 31 in contact with the side surface 36. The front-end projection 40 is arranged at the corner portion 31b formed by a side of the front end surface 31 in contact with the upper surface 33 and a side of the front end surface 31 in contact with the side surface 35. That is, the two front-end projections 401, 402 are arranged at a first end portion in the Z direction and at both ends in the Y direction of the front end surface 31. The front-end projection 403 is arranged at the corner portion 31c formed by a side of the front end surface 31 in contact with the side surface 36 and a side of the front end surface 31 in contact with the bottom surface 34. The front-end projection 404 is arranged at the corner portion 31d formed by a side of the front end surface 31 in contact with the side surface 35 and a side of the front end surface 31 in contact with the bottom surface 34. That is, the two front-end projections 403, 404 are arranged at a second end portion in the Z direction and at both ends in the Y direction of the front end surface 31. In the following description, when the front-end projections 401, 402, 403, 404 are described without being distinguished from each other, each of the front-end projections 401, 402, 403, 404 is referred to as a "front-end projection 40".

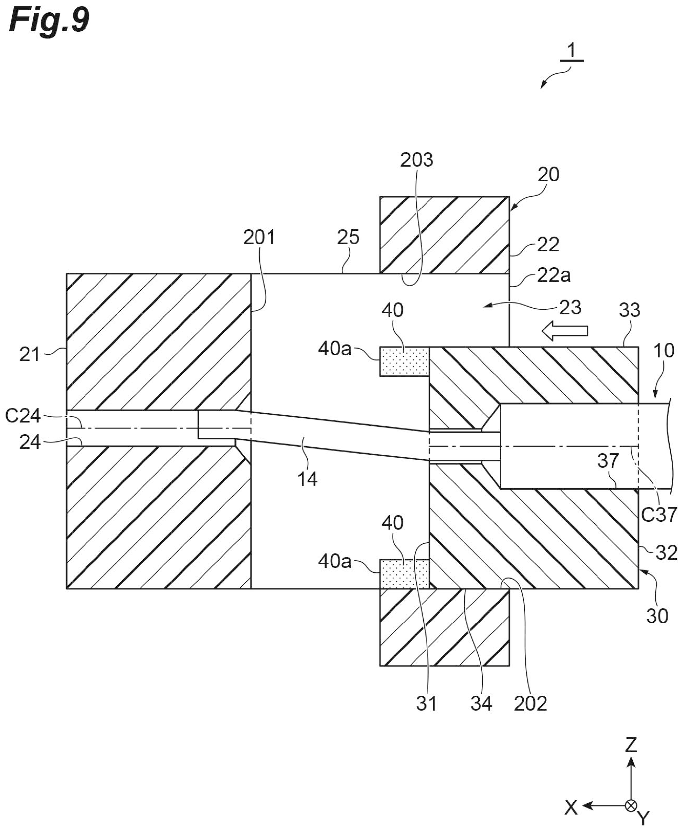

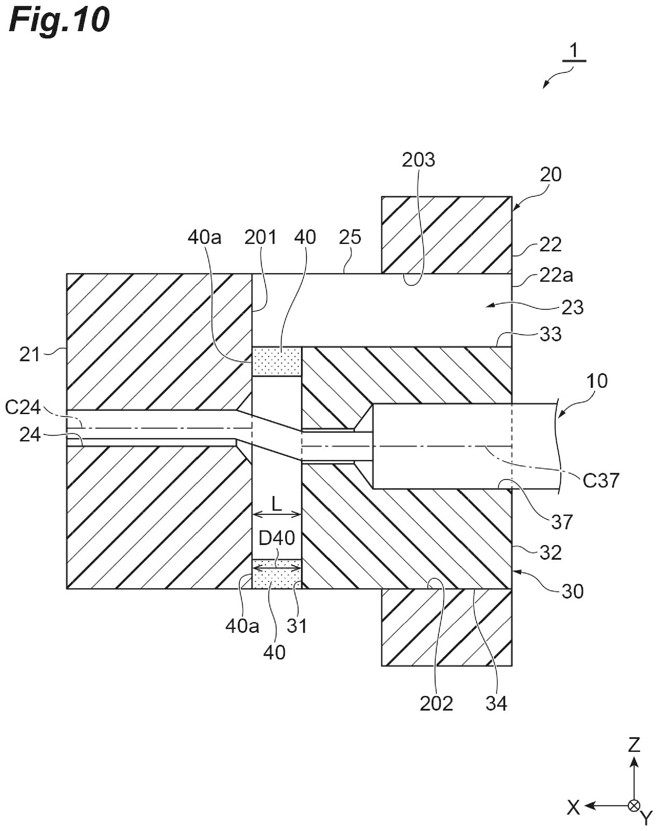

FIG. 9 is a view showing a state in which the holding member 30 is being inserted into the ferrule 20. FIG. 10 is a view showing a state after the holding member 30 is inserted into the ferrule 20. As shown in FIG. 9, when the holding member 30 is inserted into the ferrule 20, for example, the bottom surface 34 of the holding member 30 holding the optical fiber 10 that has been rotationally aligned is placed on the bottom wall surface 202. The bottom surface 34 of the holding member 30 is in contact with the bottom wall surface 202 in the Z direction, whereby the position of the holding member 30 in the Z direction with respect to the ferrule 20 is determined. Here, the flat bottom surface 34 is brought into contact with the flat bottom wall surface 202, thereby stabilizing the position and rotation angle of the holding member 30 with respect to the ferrule 20, and thus the holding member 30 can be mounted on the ferrule 20 with high accuracy. Further, the position of the holding member 30 in the Y direction is adjusted so that the insertion holes 24 of the ferrule 20 correspond to respective ones of the holding holes 37 of the holding member 30, whereby the position of the holding member 30 in the Y direction with respect to the ferrule 20 is determined.

In this state, it is difficult to completely align the central axis C24 of each insertion hole 24 with a central axis C37 of each holding hole 37 due to an influence of manufacturing tolerances, and thus, as shown in FIG. 9, an axial misalignment may occur between each insertion hole 24 and each holding hole 37. In this case, when the tip portion 14 of the optical fiber 10 protruding from the holding member 30 is inserted into each insertion hole 24 from the introduction hole 23, bending caused by the misalignment between the central axes C24 and C37 is applied to the tip portion 14. When the holding member 30 is further moved forward from the state shown in FIG. 9, the contact surface 40a of each front-end projection 40 formed on the front end surface 31 of the holding member 30 comes into contact with the inner wall surface 201 of the ferrule 20 in the X direction as shown in FIG. 10.

As the contact surface 40a of each front-end projection 40 comes into contact with the inner wall surface 201, the movement of the holding member 30 in the X direction with respect to the ferrule 20 is stopped, and a distance L between the inner wall surface 201 and the front end surface 31 is maintained. The projection amount D40 of each front-end projection 40 from the front end surface 31 is equal to the distance L. Thus, the distance L can be adjusted by adjusting the projection amount D40 of each front-end projection 40. Thus, in the embodiment, each front-end projection 40 is used to adjust the distance L. The distance L greatly affects a radius of curvature R of the bending of the optical fiber 10 (hereinafter, simply referred to as "bend radius R"). For example, when the distance L is too small, the bending of the optical fiber 10 becomes sharp, and thus the bending stress on the optical fiber 10 increases. On the other hand, when the distance L is too large, deflection is likely to occur in the middle portion of the optical fiber 10 between the inner wall surface 201 and the front end surface 31, and the bending stress on the optical fiber 10 increases.

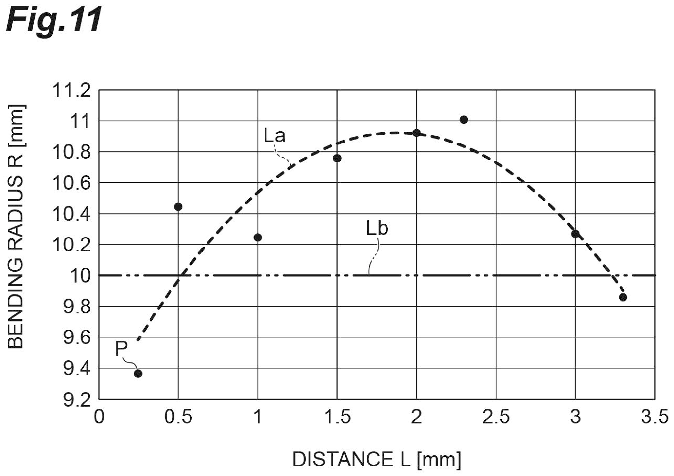

FIG. 11 is a graph showing a relationship between the bending radius R of the optical fiber 10 and the distance L between the front end surface 31 and the inner wall surface 201. A horizontal axis of FIG. 11 indicates the distance L [mm]. A vertical axis of FIG. 11 indicates the bending radius R [mm]. Plots P indicate calculated values (simulation results) of the bending radius R when the distance L is varied. A curve La is an approximate curve of the plots P. As is clear from the curve La, as the distance L decreases, the bending radius R decreases and the bending stress increases. As the distance L increases, the bending radius R decreases and the bending stress increases. As described above, it is understood that when the distance L is too small or too large, the bending stress of the optical fiber 10 increases.

In FIG. 11, a reference line Lb indicates a line where the bending radius R becomes 10 mm. When the bending radius R of the optical fiber 10 is 10 mm or less, the bending stress on the optical fiber 10 increases, and failures such as disconnection of the optical fiber 10 or an increase in transmission loss may occur. These failures occur similarly both in the coated portion 13 and the coating-removed portion 12 of the optical fiber 10. Thus, from the viewpoint of maintaining the long-term reliability of the optical fiber 10, the bending radius R of the optical fiber 10 may be larger than 10 mm. That is, the plots P may be located above the reference line Lb. The plots P above the reference line Lb are distributed in a range where the distance L is 0.5 mm to 3 mm. On the other hand, the plots P below the reference line Lb are distributed in ranges smaller than 0.5 mm and larger than 3 mm.

When the plots P are distributed in a range smaller than 0.5 mm and larger than 3 mm, as described above, the increased bending stress on the optical fiber 10 makes disconnection of the optical fiber 10 more likely to occur. In view of this, the distance L is adjusted so as to be within a specified range, for example, 0.5 mm to 3 mm. From the viewpoint of more effectively reducing an increase in the bending stress on the optical fiber 10, the distance L may be, for example, within a range of 1 mm to 3 mm, or within a range of 1.5 mm to 2.5 mm. In the embodiment, when the tip portions 14 of the plurality of optical fibers 10 are inserted into respective ones of the plurality of insertion holes 24 in the X direction, the plurality of front-end projections 40 as stoppers come into contact with the inner wall surface 201, thereby maintaining the distance L within the specified range.

After each front-end projection 40 comes into contact with the inner wall surface 201, the adhesive is injected through the window 25 of the ferrule 20. The holding member 30 and the optical fiber 10 are fixed to the ferrule 20 by curing the adhesive. In each drawing, the adhesive is not shown for convenience. After the ferrule front-end surface 21 is polished, a spring and a housing are assembled, thereby obtaining the optical connector 1.

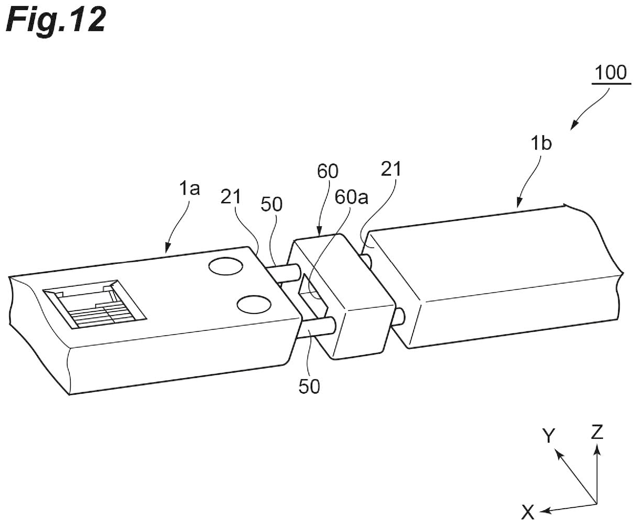

FIG. 12 is a perspective view of an optical connection assembly 100 according to the embodiment. The optical connection assembly 100 includes a first optical connector 1a, a second optical connector 1b, a pair of guide pins 50, 50, and a spacer 60. Each of the first optical connector 1a and the second optical connector 1b has the same configuration as the optical connector 1 described above. In the optical connection assembly 100, the ferrule front-end surface 21 of the first optical connector 1a and the ferrule front-end surface 21 of the second optical connector 1b face each other in the X direction with a gap therebetween. The pair of guide pins 50, 50 are fitted into a pair of guide holes 26, 26 of the first optical connector 1a and a pair of guide holes 26, 26 of the second optical connector 1b. Thus, the positions of the first optical connector 1a and the second optical connector 1b in the YZ plane are defined.

The spacer 60 is a plate-like member including an opening 60a. The spacer 60 is disposed between the ferrule front-end surface 21 of the first optical connector 1a and the ferrule front-end surface 21 of the second optical connector 1b. The opening 60a allows a plurality of optical paths extending between the first optical connector 1a and the second optical connector 1b to pass therethrough. Thus, the first optical connector 1a and the second optical connector 1b are optically coupled. The spacer 60 comes into contact with the ferrule front-end surface 21 of the first optical connector 1a and the ferrule front-end surface 21 of the second optical connector 1b. Thus, a spacing between the first optical connector 1a and the second optical connector 1b in the X direction is defined.

The effects obtained by the holding member 30, the optical connector 1, and the optical connection assembly 100 according to the embodiment described above will be described together with conventional problems.

As described above, when the holding member 30 is mounted on the ferrule 20, an axial misalignment between the insertion hole 24 of the ferrule 20 and the holding hole 37 of the holding member 30 may occur. In this case, bending caused by this axial misalignment is applied to the optical fiber 10. The distance L between the front end surface 31 of the holding member 30 and the inner wall surface 201 of the ferrule 20 greatly affects the increase or decrease of the bending stress of the optical fiber 10. When the holding member 30 is mounted on the ferrule 20, if the holding member 30 is pushed into the ferrule 20 to a position where the front end surface 31 of the holding member 30 abuts against the inner wall surface 201, the bending stress on the optical fiber 10 becomes extremely large, and the optical fiber 10 is likely to be broken. In view of this, it is conceivable to manage the position of the holding member 30 with respect to the ferrule 20 by observation and adjustment by an operator so that the front end surface 31 of the holding member 30 is not too close to the inner wall surface 201. However, in this case, the difficulty of the work when mounting the holding member 30 on the ferrule 20 increases, and working man-hours may increase.

In the embodiment, the holding member 30 includes the plurality of front-end projections 40 as stoppers that stop the movement of the holding member 30 with respect to the ferrule 20 so that the distance L in the X direction between the front end surface 31 of the holding member 30 and the inner wall surface 201 of the ferrule 20 is within the specified range when the tip portions 14 of the plurality of optical fibers 10 are inserted into respective ones of the plurality of insertion holes 24 in the X direction. As described above, the distance L between the front end surface 31 of the holding member 30 and the inner wall surface 201 of the ferrule 20 greatly affects the bending stress on the optical fiber 10. When the distance L is too small, the optical fiber 10 extending from the front end surface 31 to the inner wall surface 201 is likely to be bent sharply, and thus the bending stress on the optical fiber 10 increases. When the distance L is too large, the middle portion of the optical fiber 10 between the front end surface 31 and the inner wall surface 201 is likely to deflect. Thus, the bending stress to the optical fiber 10 increases in this case as well. In the embodiment, the distance L is maintained within the specified range by using the plurality of front-end projections 40, so that the position of the holding member 30 with respect to the ferrule 20 can be easily and appropriately restricted so as not to increase the bending stress on the optical fiber 10. As a result, it is possible to reduce the occurrence of failures such as an increase in transmission loss and damage to the optical fiber 10 due to an increase in the bending stress. Thus, the holding member 30 can reduce a decrease in reliability of the optical fiber 10.

As in the embodiment, the specified range may be 0.5 mm to 3 mm. By setting the distance L to be 0.5 mm or more, it is possible to effectively reduce an increase in the bending stress due to the occurrence of a sharp bend in the optical fiber 10. By maintaining the distance L to be 3 mm or less, it is possible to effectively reduce an increase in the bending stress due to the occurrence of the deflection in the middle portion of the optical fiber 10.

As in the embodiment, at least one front-end projection 40 protruding from the front end surface 31 in the X direction may be used as a stopper. In this case, the front-end projection 40 comes into contact with the inner wall surface 201 of the ferrule 20 in the X direction, so that the distance L between the front end surface 31 and the inner wall surface 201 can be easily and reliably maintained within the specified range.

As in the embodiment, the plurality of front-end projections 40 may be used as stoppers. The plurality of front-end projections 40 may be arranged to be spaced apart from each other in at least one of the Z direction and the Y direction. In this case, when the holding member 30 is fixed to the ferrule 20 by injecting the adhesive into the ferrule 20, the adhesive can easily spread into the ferrule 20 through a space between the plurality of front-end projections 40. That is, in the above configuration, it is possible to reduce the obstruction of the flow of the adhesive by the stopper. This makes it possible to more reliably fix the plurality of optical fibers 10 and the holding member 30 by the adhesive.

As in the embodiment, the plurality of front-end projections 40 may be symmetrically arranged with respect to the center CP of the front end surface 31 in at least one of the Z direction and the Y direction. In this case, in a state in which the plurality of front-end projections 40 are in contact with the inner wall surface 201, the posture of the holding member 30 with respect to the ferrule 20 can be stabilized. As a result, it is possible to reduce an increase in the bending stress caused by the instability of the posture of the holding member 30.

As in the embodiment, each of the plurality of optical fibers 10 may be a multicore optical fiber. When such an optical fiber 10 is used, rotational alignment of the optical fiber 10 is required. In this case, the bending stress of the optical fiber 10 is more likely to increase due to the friction between the outer peripheral surface of the tip portion 14 of the optical fiber 10 and the inner peripheral surface of the insertion hole 24. In the embodiment, since the increase in the bending stress can be reduced as described above, the risk of occurrence of failures due to the increase in the bending stress can be effectively reduced.

The holding member, the optical connector, and the optical connection assembly of the present disclosure are not limited to the above-described embodiments. The holding member, the optical connector, and the optical connection assembly of the present disclosure may be modified in specific aspects without departing from the scope of the claims.

### <Modification 1>

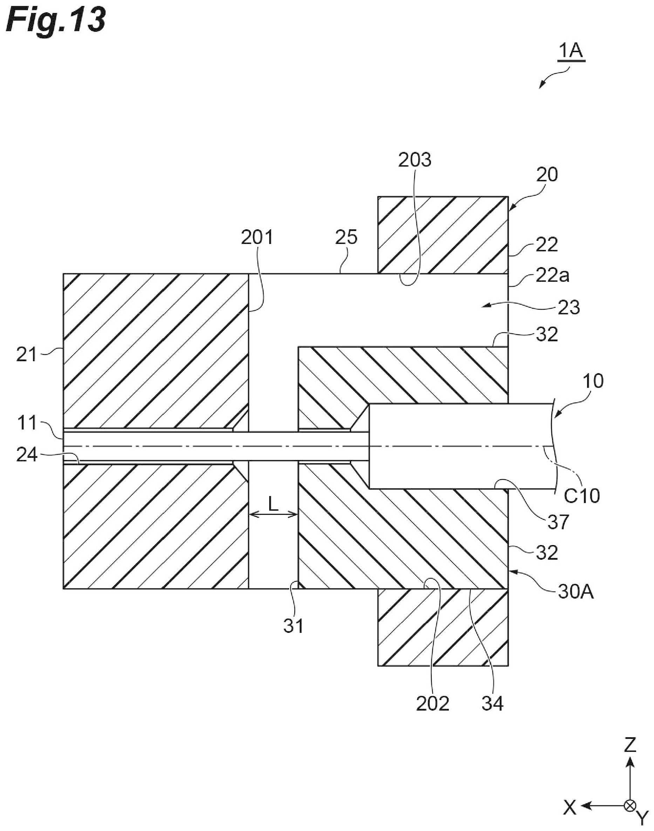

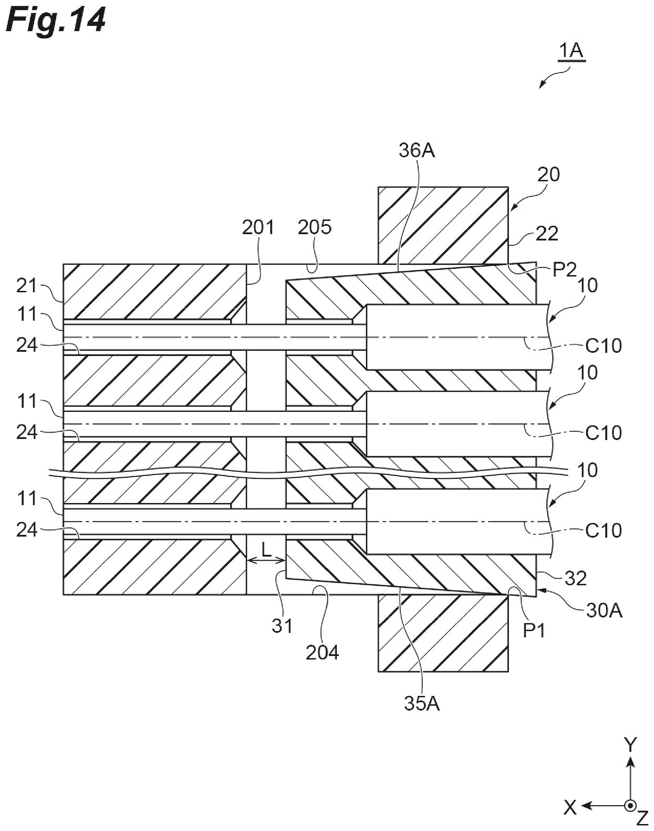

FIG. 13 is a cross-sectional view showing an XZ cross-section of an optical connector 1A according to a modification 1. FIG. 14 is a cross-sectional view showing an XY cross-section of the optical connector 1A. In the optical connector 1 according to the above-described embodiment, the case where the plurality of front-end projections 40 formed on the front end surface 31 of the holding member 30 are used as stoppers has been described. In the optical connector 1A according to the modification, a pair of side surfaces 35A, 36A of a holding member 30A are used as stoppers.

As shown in FIG. 14, the side surfaces 35A, 36A are inclined with respect to the XZ plane so that a distance between the side surfaces 35A, 36A in the Y direction increases with decreasing distance from the rear end surface 32 in the X direction. A distance between the side surface 35A and the side wall surface 204 in the Y direction decreases with decreasing distance from the rear end surface 32 in the X direction. The side surface 35A is in contact with a connection portion P1 between the ferrule rear-end surface 22 and the side wall surface 204 in the X direction and the Y direction. The distance between the side surface 36A and the side wall surface 205 in the Y direction decreases with decreasing distance from the rear end surface 32 in the X direction. The side surface 36A is in contact with a connection portion P2 between the ferrule rear-end surface 22 and the side wall surface 205 in the X direction and the Y direction.

When the holding member 30A is inserted into the inside of the ferrule 20 in the X direction, moving the holding member 30A forward by a certain amount inside the ferrule 20 causes the side surfaces 35A, 36A of the holding member 30A to respectively come into contact with the side wall surfaces 204, 205 in the X direction. Thus, the movement of the holding member 30A in the X direction with respect to the ferrule 20 is stopped. The side surfaces 35A, 36A of the holding member 30A determine the position of the holding member 30A in the X direction with respect to the ferrule 20 so that the distance L between the front end surface 31 of the holding member 30A and the inner wall surface 201 of the ferrule 20 is maintained within the above-described specified range (for example, 0.5 mm to 3 mm). As described above, the side surfaces 35A, 36A maintain the distance L within the specified range when the plurality of optical fibers 10 are inserted into respective ones of the plurality of insertion holes 24 in the X direction. By maintaining the distance L within the specified range using the side surfaces 35A, 36A, the position of the holding member 30A with respect to the ferrule 20 can be easily and appropriately restricted so that the bending stress on the optical fiber 10 is not increased. Thus, the holding member 30A can also obtain similar effects to those of the above-described embodiment.

Further, in the holding member 30A, the side surfaces 35A, 36A respectively come into contact with the side wall surfaces 204, 205 in the Y direction, whereby the position of the holding member 30A in the Y direction with respect to the ferrule 20 can be determined. That is, since the side surfaces 35A, 36A are inclined such that the distance between the side surfaces 35A, 36A in the Y direction increases with decreasing distance from the rear end surface 32, the position of the holding member 30A in the Y direction with respect to the ferrule 20 is determined with higher accuracy as the holding member 30A is moved forward inside the ferrule 20. In this manner, the side surfaces 35A, 36A of the holding member 30A can have both the function of positioning the holding member 30A in the X direction with respect to the ferrule 20 and the function of positioning the holding member 30A in the Y direction with respect to the ferrule 20.

In the holding member 30A, both of the side surfaces 35A, 36A are not necessarily inclined. For example, only one of the side surfaces 35A, 36A may be inclined with respect to the XZ plane such that the distance between the side surfaces 35A, 36A in the Y direction increases with decreasing distance from the rear end surface 32 in the X direction. In the holding member 30A, one or both of the upper surface 33 and the bottom surface 34 may be inclined instead of the side surfaces 35A, 36A. For example, the upper surface 33 may be inclined with respect to the XY plane such that a distance between the upper surface 33 and the bottom surface 34 in the Z direction increases with decreasing distance from the rear end surface 32 in the X direction. In this case, a distance between the upper surface 33 and the upper wall surface 203 in the Z direction decreases with decreasing distance from the rear end surface 32 in the X direction. The upper surface 33 comes into contact with a connection portion of the upper wall surface 203 with respect to the ferrule rear-end surface 22 in the X direction and the Z direction. In this configuration, the upper surface 33 and the bottom surface 34 can have both the function of positioning the holding member 30A in the X direction with respect to the ferrule 20 and the function of positioning the holding member 30A in the Z direction with respect to the ferrule 20.

### <Modification 2>

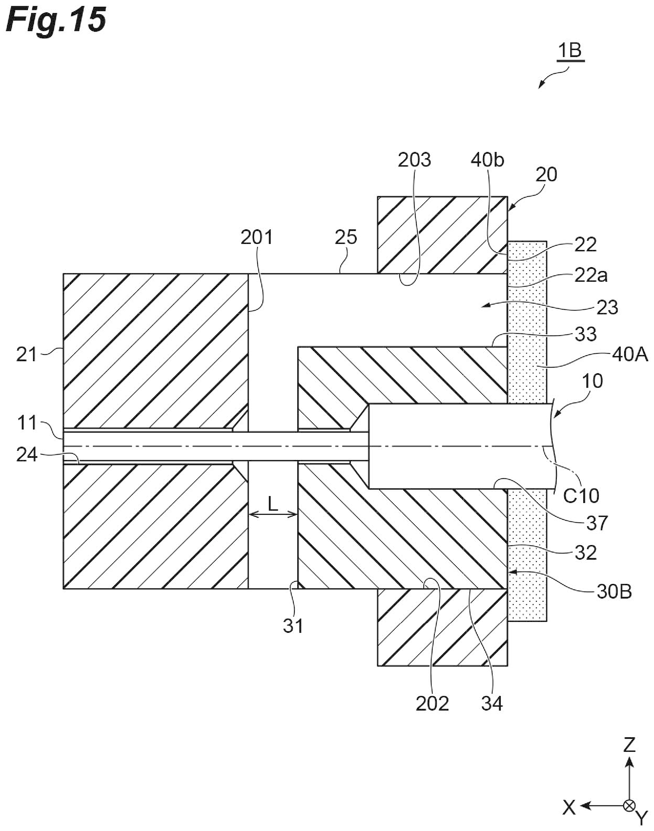

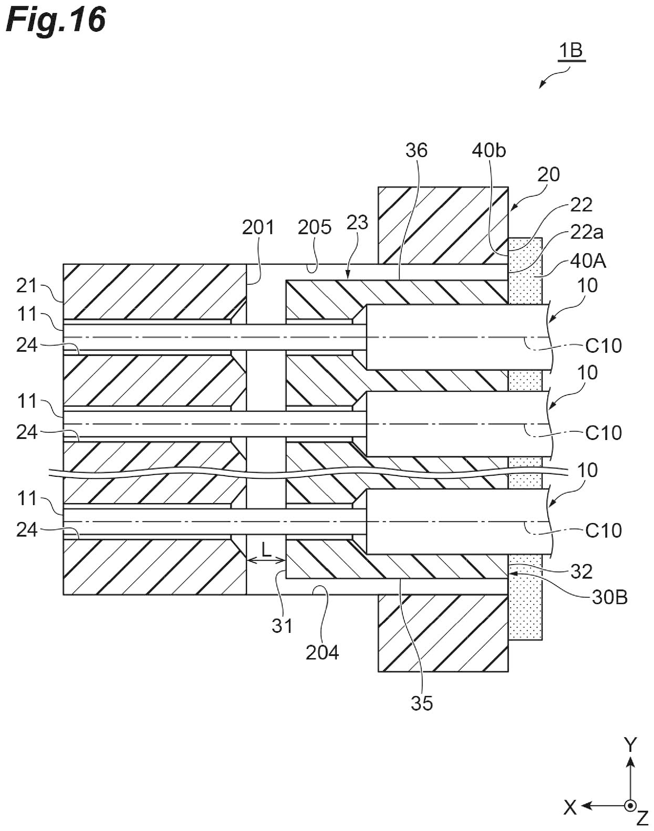

FIG. 15 is a cross-sectional view showing an XZ cross-section of an optical connector 1B according to a modification 2. FIG. 16 is a cross-sectional view showing an XY cross-section of the optical connector 1B. In the optical connector 1 according to the above-described embodiment, the case where the plurality of front-end projections 40 formed on the front end surface 31 of the holding member 30 are used as stoppers has been described. In the optical connector 1B according to the modification, a rear-end projection 40A formed on the rear end surface 32 of a holding member 30B is used as a stopper.

In the optical connector 1B, the holding member 30B includes the rear-end projection 40A as a stopper instead of the plurality of front-end projections 40. The rear-end projection 40A is formed on the rear end surface 32 of the holding member 30B. The rear-end projection 40A protrudes in at least one of the Y direction and the Z direction from the rear end surface 32. As shown in FIGS. 15 and 16, the rear-end projection 40A protrudes from the rear end surface 32 in both the Y direction and the Z direction, for example. In this case, the rear-end projection 40A spreads in a planar shape along the YZ plane. When the rear-end projection 40A is viewed in the X direction, the rear-end projection 40A has, for example, a rectangular shape larger than the opening 22a of the ferrule rear-end surface 22. The rear-end projection 40A includes a contact surface 40b facing the rear end surface 32. The contact surface 40b of a portion of the rear-end projection 40A extending from the rear end surface 32 in the Y direction and the Z direction faces the ferrule rear-end surface 22 in the X direction. That is, the contact surface 40b faces the rear end surface 32 and the ferrule rear-end surface 22 in the X direction. The contact surface 40b is fixed to, for example, the rear end surface 32 and comes into contact with the ferrule rear-end surface 22 in the X direction.

When the holding member 30B is inserted into the ferrule 20 in the X direction, moving the holding member 30B forward by a certain amount in the ferrule 20 causes the contact surface 40b of the rear-end projection 40A formed on the rear end surface 32 of the holding member 30B to come into contact with the ferrule rear-end surface 22 in the X direction. Thus, the movement of the holding member 30B in the X direction with respect to the ferrule 20 is stopped. The rear-end projection 40A of the holding member 30B determines the position of the holding member 30B in the X direction with respect to the ferrule 20 so that the distance L between the front end surface 31 of the holding member 30B and the inner wall surface 201 of the ferrule 20 is maintained within the specified range. As described above, the rear-end projection 40A maintains the distance L within the specified range when the plurality of optical fibers 10 are inserted into respective ones of the plurality of insertion holes 24 in the X direction. By maintaining the distance L within the specified range using the rear-end projection 40A, the position of the holding member 30B with respect to the ferrule 20 can be easily and appropriately restricted so that the bending stress on the optical fiber 10 is not increased. Thus, the holding member 30B can also obtain similar effects to those of the above-described embodiment.

Further, in the holding member 30B, the stopper (i.e., the rear-end projection 40A) can be formed in a wider range outside the ferrule 20, as compared with the configuration in which the stopper is formed inside the ferrule 20. In this case, since a contact area between the rear-end projection 40A and the ferrule rear-end surface 22 can be maintained large, the posture of the holding member 30B with respect to the ferrule 20 can be stabilized in a state where the rear-end projection 40A comes into contact with the ferrule rear-end surface 22. Thus, according to the present modification, it is possible to reduce an increase in the bending stress caused by instability of the posture of the holding member 30B.

The present disclosure is not limited to the above-described embodiments and modifications, and various modifications can be made. For example, the above-described embodiments and modifications may be combined with each other as long as there is no contradiction, depending on the required purpose and effect. For example, in the above-described embodiment, the case where the insertion hole of the holding member holds both the coating-removed portion and the coated portion of the optical fiber has been described. However, the insertion hole of the holding member may hold only the coating-removed portion or only the coated portion. The holding member may include a plurality of V-grooves as the "holding portion" instead of the plurality of insertion holes.

The holding member may include a tapered portion (introduction portion) for facilitating insertion of the optical fiber into the positioning portion, in an opening portion of the insertion hole at the front end surface or an opening portion of the insertion hole at the rear end surface. The introduction portion may be a tapered hole, a hole larger than the positioning portion, a groove with a radius of curvature larger than a hole diameter of the positioning portion, or a combination thereof. The holding member may include a placement portion (fiber holding portion) on which the coated portion of the optical fiber is placed at a position lower than the positioning portion so that the optical fiber is not unnecessarily bent. The holding member may further include a plurality of injection holes for injecting the adhesive into the plurality of insertion holes. In this case, each injection hole is formed to extend from a surface of the holding member toward each insertion hole, and communicates with each insertion hole individually.

### REFERENCE SIGNS LIST

1, 1A, 1B optical connector
1a first optical connector
1b second optical connector
10 optical fiber
10a core
10b cladding
11 distal end surface
12 coating-removed portion
13 coated portion
14 tip portion
20 optical connector ferrule
21 ferrule front-end surface
22 ferrule rear-end surface
22a, 60a opening
23 introduction hole
24 insertion hole
24a positioning portion
24b tapered portion
25 window
26 guide hole
30, 30A, 30B holding member
31 front end surface
31a, 31b, 31c, 31d corner portion
32 rear end surface
33 upper surface
34 bottom surface
35, 35A side surface
36, 36A side surface
37 holding hole (holding portion)
37a small-diameter portion
37b large-diameter portion
40, 401, 402, 403, 404 front-end projection (stopper)
40A rear-end projection (stopper)
40a, 40b contact surface
50 guide pin
60 spacer
100 optical connection assembly
201 inner wall surface
202 bottom wall surface
203 upper wall surface
204 side wall surface
205 side wall surface
C10, C24, C37 central axis
CP center
d11, d12, d21, d22, d31, d32, d41, d42 distance
D40 projection amount
L distance
La curve
Lb reference line
P plot
P1, P2 connection portion
VL1, VL2 virtual plane

## Claims

1. A holding member configured to be disposed, in a state of holding a plurality of optical fibers, on a bottom wall surface inside an optical connector ferrule such that a tip portion of each of the plurality of optical fibers is inserted into a respective one of a plurality of insertion holes formed in an inner wall surface of the optical connector ferrule, the holding member comprising:
a front end surface facing the inner wall surface in a first direction intersecting the inner wall surface;
a rear end surface disposed opposite the front end surface in the first direction;
a bottom surface in contact with the bottom wall surface in a second direction intersecting the first direction;
a plurality of holding portions extending along the first direction between the front end surface and the rear end surface and arranged side by side along a third direction intersecting the first direction and the second direction, each of the plurality of holding portions being configured to be capable of holding a respective one of the plurality of optical fibers; and
a stopper formed on a surface of the holding member and configured to maintain a distance in the first direction between the front end surface and the inner wall surface within a specified range when the tip portions of the plurality of optical fibers extending from the holding member are inserted into respective ones of the plurality of insertion holes in the first direction.

2. The holding member according to claim 1,
wherein the specified range is 0.5 mm to 3 mm.

3. The holding member according to claim 1 or claim 2,
wherein the stopper is at least one front-end projection formed on the front end surface and protruding along the first direction from the front end surface.

4. The holding member according to claim 3,
wherein the stopper includes a plurality of the front-end projections, and
wherein the plurality of front-end projections are arranged to be spaced apart from each other in at least one of the second direction and the third direction, each of the second and third directions being along the front end surface.

5. The holding member according to claim 4,
wherein the plurality of front-end projections are symmetrically arranged with respect to a center of the front end surface in at least one of the second direction and the third direction.

6. The holding member according to claim 1 or claim 2, further comprising:
a pair of side surfaces as the surface, the pair of side surfaces being arranged between the front end surface and the rear end surface to be spaced apart from each other along the third direction,
wherein a distance between the pair of side surfaces along the third direction increases with decreasing distance from the rear end surface along the first direction, and
wherein each of the pair of side surfaces serve as the stopper and each side surface comes into contact with a respective one of a pair of side wall surfaces inside the optical connector ferrule in the first direction and the third direction.

7. The holding member according to claim 1 or claim 2
wherein the stopper is a rear-end projection formed on the rear end surface and protruding in at least one of the second direction and the third direction from the rear end surface, and
wherein the rear-end projection is in contact with a ferrule rear-end surface in the first direction, the ferrule rear-end surface including an opening in communication with the inside of the optical connector ferrule.

8. An optical connector comprising:
the holding member according to any one of claim 1 to claim 7;
the plurality of optical fibers configured to be held by the holding member in a state where the tip portions thereof protrude from the holding member; and
the ferrule including the plurality of insertion holes into each of which a respective one of the tip portions of the plurality of optical fibers is inserted and fixed.

9. The optical connector according to claim 8,
wherein each of the plurality of optical fibers is a multicore optical fiber.

10. An optical connection assembly comprising:
a first optical connector and a second optical connector, each being the optical connector according to claim 8 or claim 9,
wherein the first optical connector and the second optical connector are arranged to face each other along the first direction.
